# EUROPEAN PATENT APPLICATION

(11) **EP 4 783 024 A1**
(43) Date of publication of application: **29.07.2026**
(21) Application number: 24875994.6
(22) Date of filing: 07.05.2024
(51) Int. Cl.: G06F 16/21, G06Q 20/40

(54) **DATA PROCESSING METHOD AND APPARATUS, AND RELATED DEVICE**

(30) Priority: 10.10.2023 CN 202311308663; 30.11.2023 CN 202311645498
(71) Applicant: Huawei Cloud Computing Technologies Co., Ltd., Gui'an New District, Guizhou 550025 (CN)
(72) Inventor: WANG, Dongdong, Guiyang, Guizhou 550025 (CN); CUI, Bo, Guiyang, Guizhou 550025 (CN)
(74) Representative: Goddar, Heinz J.
(86) International application number: PCT/CN2024/091418
(87) International publication number: WO 2025/077167

(57) **Abstract**

This application provides a data processing method, including: obtaining first event data; creating, for the first event data, a first trigger that indicates first window-expiration time; executing data computing based on event data within a first time window, obtaining a first computation result used to update a database, and outputting the first computation result, where the event data within the first time window includes the first event data; and when the first window-expiration time indicated by the first trigger arrives, executing data computing based on event data within a second time window, obtaining a second computation result used to update the database, and outputting the second computation result, where the event data within the second time window does not include the first event data. In this way, when the first event data expires, the computation result in the database is triggered to be updated by using the event data within the second time window, thereby improving accuracy of reading the computation result from the database. In addition, this application further provides a corresponding data processing apparatus and a related device.

## Description

This application claims priorities to Chinese Patent Application No. 202311308663.5, filed with the China National Intellectual Property Administration on October 10, 2023 and entitled "DATA PROCESSING METHOD AND APPARATUS, AND RELATED DEVICE", and to Chinese Patent Application No. 202311645498.2, filed with the China National Intellectual Property Administration on November 30, 2023 and entitled "DATA PROCESSING METHOD AND APPARATUS, AND RELATED DEVICE", both of which are incorporated herein by reference in their entireties.

### TECHNICAL FIELD

This application relates to the field of data processing technologies, and in particular, to a data processing method and apparatus, and a related device.

### BACKGROUND

In an actual service scenario, a computation result is often generated based on data within a latest time window. For example, in a bank risk control scenario, an anti-fraud system may collect statistics on a quantity of transactions or a transaction amount of a user in a latest hour (that is, a time window), to identify whether a transaction behavior of the user is abnormal. For example, when the quantity of transactions of the user in the latest hour is excessively high or the transaction amount of the user in the latest hour is excessively large, the anti-fraud system may determine that the transaction behavior of the user is abnormal, to further intercept a subsequent transaction behavior of the user.

Currently, execution of a computational process for event data (that is, data related to an occurred event) within the latest time window is triggered only when there is an event driver, and a generated computation result is stored in a database. For example, each time a user completes a transaction of an amount, aggregate computation may be triggered on transaction data generated by the user in a latest hour, and an aggregation result is stored. However, when no event data is generated, the computation result stored in the database keeps unchanged. This makes the computation result stored in the database easily expire. That is, the computation result read from the database is not a real computation result corresponding to the event data within the latest time window. As a result, errors are prone to occur in the read computation result.

### SUMMARY

In view of this, an embodiment of this application provides a data processing method, to improve accuracy of a computation result read from a database. This application further provides a corresponding data processing apparatus, a compute device cluster, a computer-readable storage medium, and a computer program product.

According to a first aspect, an embodiment of this application provides a data processing method. The method may be performed by a corresponding data processing apparatus. Specifically, the data processing apparatus obtains first event data. The first event data may be, for example, event data generated by an application in a running process, for example, transaction event data. Then, in response to obtaining the first event data, the data processing apparatus creates a first trigger for the first event data. The first trigger indicates first window-expiration time corresponding to the first event data, that is, indicates expiration time of the first event data. In addition, in response to obtaining the first event data, the data processing apparatus executes data computing based on event data within a first time window, obtains a first computation result, and outputs the first computation result, where the event data within the first time window includes the first event data, and the first computation result is used to update a computation result in a database. That is, when there is new event data, the data processing apparatus is triggered to execute window computing and update the database. When the first window-expiration time indicated by the first trigger arrives, it represents that the first event data expires. In this case, the data processing apparatus executes data computing based on event data within a second time window, obtains a second computation result, and outputs the second computation result, where the event data within the second time window does not include the expired first event data, a start moment of the second time window is later than a start moment of the first time window, and the second computation result is used to update the computation result in the database.

In this way, the data processing apparatus is triggered, when obtaining the first event data, to update, by using the event data within the first time window, the computation result stored in the database, and is also triggered, when the first event data expires (that is, the first window-expiration time corresponding to the first event data arrives), to update, by using the event data within the second time window (that is, a new time window), the computation result stored in the database. This causes the computation result stored in the database to be dynamically updated as a time window shifts, and avoids expiration of the computation result stored in the database, thereby effectively improving accuracy of the computation result read from the database. In addition, in a process in which the data processing apparatus updates the computation result in the database, a quantity of resources that need to be consumed is small, for example, quantities of compute resources and storage resources that are consumed are small, and reliability and performance of updating the computation result in the database are high.

In a possible implementation, the data processing apparatus may further obtain second event data and third event data, and create a second trigger for the second event data in response to obtaining the second event data, where the second trigger indicates second window-expiration time corresponding to the second event data. In addition, the data processing apparatus further creates a third trigger for the third event data in response to obtaining the third event data, where the third trigger indicates third window-expiration time corresponding to the third event data, a time interval between the third window-expiration time and the second window-expiration time is less than window-expiration delay duration corresponding to the second event data, and the third window-expiration time is later than the second window-expiration time. In actual application, the data processing apparatus may further separately trigger, based on the obtained second event data and third event data, execution of a data computational process. In this way, the data processing apparatus may first determine a delay time period based on the second window-expiration time and the window-expiration delay duration, and then when an end moment of the delay time period arrives, the data processing apparatus executes data computing based on event data within a third time window, where the event data within the third time window does not include the second event data and the third event data. In this way, when a plurality of pieces of event data all expire in a short time, the data processing apparatus may be triggered to execute a data computational process only once, to reduce resource consumption.

In a possible implementation, the second event data and the third event data are stored in a target storage area. When executing data computing based on the event data within the third time window, the data processing apparatus may specifically first obtain original event data stored in the target storage area, and exclude the second event data and the third event data from the original event data, and obtain the event data within the third time window. In this way, the data processing apparatus may execute data computing based on the event data within the third time window, and obtain a third computation result, where the computation result is used to update the computation result in the database. In this way, the data processing apparatus may compute and obtain a correct computation result by excluding the expired event data, so that after the database is updated by using the correct computation result, the accuracy of the computation result read from the database may be effectively improved.

In a possible implementation, the second event data and the third event data include a same primary key, and the target storage area stores event data including different primary keys. Therefore, when obtaining the original event data stored in the target storage area, the data processing apparatus may specifically obtain, based on the primary key, the original event data stored in the target storage area. In this way, the data processing apparatus may perform data computing on event data, which has a same primary key, each time, and event data that does not have the same primary key does not participate in a same data computational process, to meet differentiated requirements of different services in an actual application scenario. That is, event data of different services may not participate in data computing.

In a possible implementation, the data processing apparatus may further obtain fourth event data, and in response to obtaining the fourth event data, create a fourth trigger for the fourth event data, where the fourth trigger indicates fourth window-expiration time corresponding to the fourth event data, a time interval between the fourth window-expiration time and the second window-expiration time is greater than the window-expiration delay duration corresponding to the second event data, and the fourth window-expiration time is later than the second window-expiration time; and then after data computing is executed based on the event data within the third time window, and when the fourth window-expiration time indicated by the fourth trigger arrives, execute data computing based on event data within a fourth time window, where the event data within the fourth time window does not include the second event data, the third event data, and the fourth event data. In this way, when a time interval between expiration time of two pieces of event data is long, the data processing apparatus may separately execute a data computational process once when the two pieces of event data expire, to dynamically update the computation result in the database, and improve the accuracy of the computation result read from the database.

In a possible implementation, after obtaining the third computation result, the data processing apparatus may delete the second event data and the third event data from the target storage area, to release storage resources occupied by the expired event data, thereby improving resource utilization.

In a possible implementation, the data processing apparatus may further output a configuration interface. For example, the data processing apparatus may output the configuration interface to a client, so that the client presents the configuration interface to a user. Therefore, the data processing apparatus may obtain, in response to a configuration operation performed by the user on the configuration interface for a window-expiration delay duration, the window-expiration delay duration corresponding to the second event data. In this way, an output processing apparatus may support a user-defined configuration of the window-expiration delay duration, to meet differentiated requirements of different users for the window-expiration delay duration, and improve flexibility of performing computing on event data by the data processing apparatus.

According to a second aspect, this application provides a data processing apparatus, where the data processing apparatus includes: an interaction module, configured to obtain first event data; a creation module, configured to create a first trigger for the first event data in response to obtaining the first event data, where the first trigger indicates first window-expiration time corresponding to the first event data; a processing module, configured to: execute, in response to obtaining the first event data, data computing based on event data within a first time window, and obtain a first computation result, where the event data within the first time window includes the first event data, and the first computation result is used to update a computation result in a database; the interaction module, further configured to output the first computation result; the processing module, further configured to: execute, when the first window-expiration time indicated by the first trigger arrives, data computing based on event data within a second time window, and obtain a second computation result, where the event data within the second time window does not include the first event data, a start moment of the second time window is later than a start moment of the first time window, and the second computation result is used to update the computation result in the database; and the interaction module, further configured to output the first computation result.

In a possible implementation, the interaction module is further configured to obtain second event data before data computing is executed based on the event data within the second time window; the creation module is further configured to create a second trigger for the second event data in response to obtaining the second event data, where the second trigger indicates second window-expiration time corresponding to the second event data; and create a third trigger for the third event data in response to obtaining the third event data, where the third trigger indicates third window-expiration time corresponding to the third event data, a time interval between the third window-expiration time and the second window-expiration time is less than window-expiration delay duration corresponding to the second event data, and the third window-expiration time is later than the second window-expiration time; and the processing module is further configured to determine a delay time period based on the second window-expiration time and the window-expiration delay duration; and when an end moment of the delay time period arrives, execute data computing based on event data within the third time window, where the event data within the third time window does not include the second event data and the third event data.

In a possible implementation, the second event data and the third event data are stored in a target storage area. The processing module is configured to: obtain original event data stored in the target storage area; exclude the second event data and the third event data from the original event data, and obtain the event data within the third time window; and execute data computing based on the event data within the third time window, and obtain a third computation result, where the third computation result is used to update the computation result in the database.

In a possible implementation, the second event data and the third event data include a same primary key, and the target storage area stores event data including different primary keys; and the processing module is configured to obtain, based on the primary key, the original event data stored in the target storage area.

In a possible implementation, the interaction module is further configured to obtain fourth event data; the creation module is further configured to create a fourth trigger for the fourth event data in response to obtaining the fourth event data, where the fourth trigger indicates fourth window-expiration time corresponding to the fourth event data, a time interval between the fourth window-expiration time and the second window-expiration time is greater than the window-expiration delay duration corresponding to the second event data, and the fourth window-expiration time is later than the second window-expiration time; and the processing module is further configured to execute, after data computing is executed based on the event data within the third time window, and when the fourth window-expiration time indicated by the fourth trigger arrives, data computing based on event data within a fourth time window, where the event data within the fourth time window does not include the second event data, the third event data, and the fourth event data.

In a possible implementation, the apparatus further includes a storage module, configured to delete, after the third computation result is obtained, the second event data and the third event data from the target storage area.

In a possible implementation, the interaction module is further configured to: output a configuration interface; and obtain, in response to a configuration operation performed by a user on the configuration interface for a window-expiration delay duration, the window-expiration delay duration corresponding to the second event data.

The data processing apparatus provided in the second aspect corresponds to the data processing method provided in the first aspect. Therefore, for technical effects of the data processing apparatus provided in the second aspect, refer to related descriptions of technical effects of any one of the first aspect or the implementations of the first aspect. Details are not described herein again.

According to a third aspect, this application provides a compute device cluster. The compute device cluster includes at least one compute device, and the at least one compute device includes at least one processor and at least one memory. The at least one memory is configured to store instructions, and the at least one processor executes the instructions stored in the at least one memory, to cause the compute device cluster to perform the data processing method in any one of the first aspect or the possible implementations of the first aspect. It should be noted that, the memory may be integrated into the processor, or may be independent of the processor. The at least one compute device may further include a bus. The processor is connected to the memory over the bus. The memory may include a readable memory and a random access memory.

According to a fourth aspect, this application provides a computer-readable storage medium, where the computer-readable storage medium stores instructions. When the instructions are run on at least one compute device, the at least one compute device is caused to perform the data processing method in any one of the first aspect or the possible implementations of the first aspect.

According to a fifth aspect, this application provides a computer program product including instructions. When the computer program product runs on at least one compute device, the at least one compute device is caused to perform the data processing method in any one of the first aspect or the possible implementations of the first aspect.

In this application, based on implementations according to the foregoing aspects, the implementations may be further combined to provide more implementations.

### BRIEF DESCRIPTION OF DRAWINGS

To describe technical solutions in embodiments of this application more clearly, the following briefly introduces accompanying drawings used for describing embodiments. It is clear that the accompanying drawings in the following description show merely some embodiments of this application, and a person of ordinary skill in the art may still derive other drawings from these accompanying drawings.
FIG. 1 is a diagram of a structure of an example of a data processing system according to this application;
FIG. 2 is a diagram of a quantity of pieces of event data within a plurality of time windows according to this application;
FIG. 3 is a schematic flowchart of a data processing method according to this application;
FIG. 4 is a diagram of an example of a table structure of defining Kafka consumption according to this application;
FIG. 5 is a diagram of an example of defining writing data into Redis according to this application;
FIG. 6A and FIG. 6B are a schematic flowchart of another data processing method according to this application;
FIG. 7 is a diagram of an example of a configuration interface according to this application;
FIG. 8 is a diagram of an example of defining an SQL job according to this application;
FIG. 9 is a diagram of a structure of a compute device according to this application; and
FIG. 10 is a diagram of a structure of a compute device cluster according to this application.

### DESCRIPTION OF EMBODIMENTS

The following describes solutions in embodiments provided in this application with reference to accompanying drawings in this application.

In the specification, claims, and accompanying drawings of this application, the terms "first", "second", and the like are intended to distinguish between similar objects but do not necessarily indicate a specific order or sequence. It should be understood that, the terms used in such a way are interchangeable in proper circumstances, which is merely a discrimination manner that is used when objects having a same attribute are described in embodiments of this application.

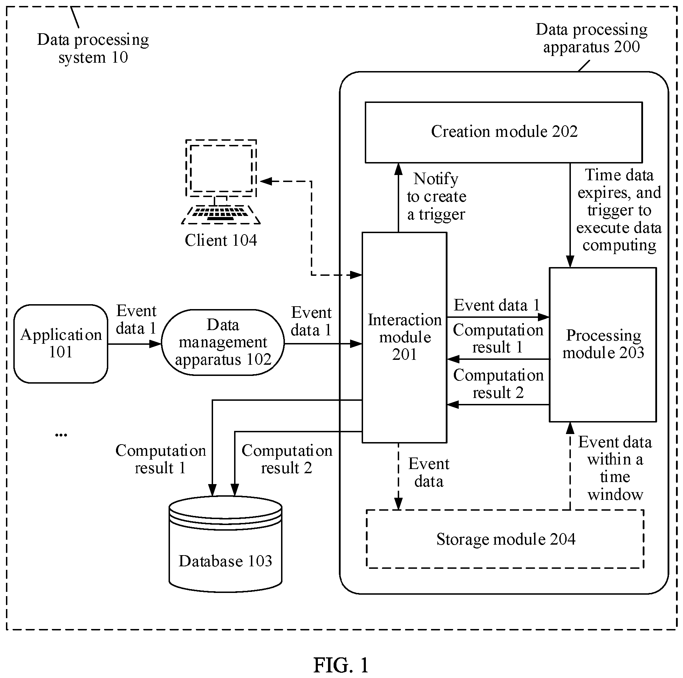

FIG. 1 is a diagram of a structure of an example of a data processing system 10. As shown in FIG. 1, the data processing system 10 includes an application 101, a message management apparatus 102, a data processing apparatus 200, and a database 103, and the application 101, the message management apparatus 102, the data processing apparatus 200, and the database 103 may communicate with each other through a network. Further, the data processing system 10 may further provide a client externally, for example, a client 104 shown in FIG. 1. The client 104 is configured to interact with a user, and the client 104 may be an application running on a user-side device, or may be a web browser externally provided by the data processing system 10, or the like.

The application 101 may run on the user-side device, or may run on a server in the network, for example, an application server. In addition, in a running process of the application 101, an event may be generated, and data related to the event (referred to as event data for short) is generated. For example, the application 101 may be, for example, transaction software, so that the application 101 may generate a transaction event based on a transaction operation performed by the user, and further generate data related to the transaction event, for example, data such as a transaction amount, transaction time, accounts of transaction parties, a user identity, and a transaction order number.

The message management apparatus 102 is configured to buffer the event data generated by the application 101 for the data processing apparatus 200 to consume the event data. For example, the message management apparatus 102 may be configured with one or more queues, so that the application 101 may write the generated event data into the queue. Correspondingly, the event data written into the queue can be accessed by the data processing apparatus 200.

The data processing apparatus 200 is configured to: obtain the event data from the message management apparatus 102, execute data computing based on event data within a time window, and obtain a corresponding computation result. The event data within the time window is event data obtained by the data processing apparatus 200 within the time window, or is referred to as event data that does not expire within the time window.

The database 103 is configured to store the computation result generated by the data processing apparatus 200. In actual application, the computation result stored in the database 103 may be read by another apparatus or application.

When there is an event driver, that is, when new event data is buffered in the message management apparatus 102, the data processing apparatus 200 may generate a computation result based on event data within a current time window. In this way, when the time window shifts with time, existence duration of a part/all of pieces of event data read by the data processing apparatus 200 exceeds duration of the time window, that is, the read event data expires. In this case, the computation result stored in the database 103 remains unchanged. However, the computation result is not a real computation result corresponding to the event data within the current time window.

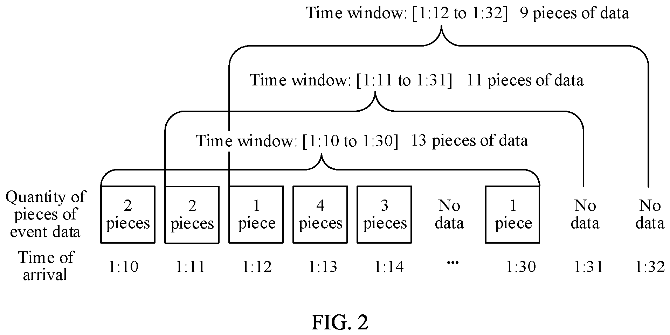

An example in which a size of a time window is 20 minutes is used for description. As shown in FIG. 2, a plurality of time windows may be obtained through division from 1:10 to 1:32, including [1:10 to 1:30], [1:11 to 1:31], [1:12 to 1:32], and the like. It is assumed that, a data computational process executed by the data processing apparatus 200 based on event data within each time window is specifically to collect statistics on a quantity of pieces of the event data. Within the time window of [1:10 to 1:30], the data processing apparatus 200 may know, through statistics collection, that there are 13 pieces of event data within the time window, and within the time window of [1:11 to 1:31], the data processing apparatus 200 may know, through statistics collection, that there are 11 pieces of event data within the time window, and within the time window of [1:12 to 1:32], the data processing apparatus 200 may know, through statistics collection, that there are 9 pieces of event data within the time window. Because one piece of new event data is generated at 1:30, the data processing apparatus 200 may collect statistics, based on the event data within the time window of [1:10 to 1:30], on the quantity of pieces of event data as 13, and stores 13 in the database 103. In this case, a quantity read from the database 103 at 1:30 is 13.

However, after 1:30, because no new event data is generated, when there is no event driver, if the data processing apparatus 200 is not triggered to update the database 103, the quantity of pieces of event data stored in the database 103 remains 13. To be specific, at 1:31 and 1:32, quantities separately read from the database 103 are both 13. However, actually, quantities of events within the time window of [1:11 to 1:31] and the time window of [1:12 to 1:32] are respectively 11 and 9, that is, the quantity of events read from the database 103 is not a real quantity of pieces of event data within the current time window. As shown in the following Table 1, errors often occur in the data read from the database 103.

**Table 1**

| Time window | Real quantity | Read quantity |
|---|---|---|
| [1:10 to 1:30] | 13 | 13 |
| [1:11 to 1:31] | 11 | 13 |
| [1:12 to 1:32] | 9 | 13 |

Based on this, the data processing apparatus 200 provided in this application can be automatically triggered, when there is no event driver, to execute a process of executing data computing based on the event data within the current time window. In this way, the database 103 is updated in time.

During specific implementation, as shown in FIG. 1, the data processing apparatus 200 may include an interaction module 201, a creation module 202, and a processing module 203. Further, the data processing apparatus 200 may further include a storage module 204. The interaction module 201 is configured to obtain event data 1 from the message management apparatus 101, where the obtained event data 1 may be buffered in the storage module 204. In addition, the interaction module 201 may notify the creation module 202 to create a trigger 1 for the event data 1, where the trigger 1 indicates window-expiration time corresponding to the event data 1 (where when the window-expiration time arrives, it represents that the event data 1 expires), and provide the event data 1 for the processing module 203. When the new event data 1 is obtained, the processing module 203 may access the storage module 204 to obtain event data (including the event data 1) obtained within a time window 1, and execute data computing based on the event data within the time window 1, for example, may collect statistics on a quantity of pieces of event data within the time window 1, to obtain a computation result 1. In this case, the computation result in the database 103 may be updated to the computation result 1. When the window-expiration time indicated by the trigger 1 arrives, the creation module 202 may trigger the processing module 203 to execute data computing based on event data within a time window 2, to obtain a computation result 2. In this case, the computation result in the database 103 may be updated to the computation result 2. Specifically, the computation result 2 may be sent to the database 103 via the interaction module 201. A start moment of the time window 2 is later than a start moment of the time window 1, that is, the time window 2 is later than the event window 1. In addition, the event data within the time window 2 does not include the event data 1.

In this way, the data processing apparatus 200 is triggered, when obtaining the event data 1, to update, by using the event data within the time window 1, the computation result stored in the database 103, and is also triggered, when the event data 1 expires (that is, the window-expiration time corresponding to the event data 1 arrives), to update, by using the event data within the time window 2, the computation result stored in the database 103. This causes the computation result stored in the database 103 to be dynamically updated as a time window shifts, and avoids expiration of the computation result stored in the database 103, thereby effectively improving accuracy of the computation result read from the database 103.

In addition, in a process in which the data processing apparatus 200 updates the computation result in the database 103, quantities of compute resources and storage resources that need to be consumed are small. In addition, when event data expires, a created trigger can be used to trigger, in time, the data processing apparatus 200 to update the computation result, thereby effectively ensuring reliability, accuracy, and performance of updating the computation result in the database 103.

The time windows shown in FIG. 2 are still used as an example for description. The data processing apparatus 200 may create a trigger 1 at 1:10 for two pieces of newly generated event data, where window-expiration time indicated by the trigger 1 is 1:31, and create a trigger 2 at 1:11 for two pieces of newly generated event data, where window-expiration time indicated by the trigger 2 is 1:32. In this way, when 1:31 arrives, the trigger 1 may trigger the data processing apparatus 200 to update the computation result stored in the database 103. In this case, the data processing apparatus 200 may specifically collect statistics on a quantity of pieces of event data as 11 based on the event data within the time window of [1:11 to 1:31], and update the quantity stored in the database 103 from 13 to 11. In this case, a quantity read from the database 103 at 1:31 is 11. Similarly, when 1:32 arrives, the trigger 2 may trigger the data processing apparatus 200 to collect statistics on a quantity of pieces of event data within the time window of [1:12 to 1:32] as 9, and update the quantity stored in the database 103 from 11 to 9. In this case, a quantity read from the database 103 at 1:32 is 9. As shown in the following Table 2, the data read from the database 103 may be correct data.

**Table 2**

| Time window | Real quantity | Read quantity |
|---|---|---|
| [1:10 to 1:30] | 13 | 13 |
| [1:11 to 1:31] | 11 | 11 |
| [1:12 to 1:32] | 9 | 9 |

It should be noted that, the data processing system 10 shown in FIG. 1 is merely used as an example for description, and is not used to limit a specific implementation of a data processing system. For example, in the data processing system 10 shown in FIG. 1, the data processing apparatus 200 may be deployed on a cloud, for example, deployed on a public cloud or a hybrid cloud, and can provide a cloud service of performing computing on data within a time window. The client 104 may be deployed on a user side, so that a user can conveniently interact with the data processing system 10 via the client 104. Alternatively, in another possible data processing system, the client 104 may not be included. In this case, the data processing apparatus 200 may be deployed on a user side, so that the data processing apparatus 200 may provide a user with a localized service of performing computing on data within a time window. In addition, the data processing apparatus 200 may present a configuration interface to the user, so that the user can perform human-machine interaction with the data processing apparatus 200 through the configuration interface. Alternatively, in another possible data processing system, the data processing system 10 may perform corresponding computing on event data provided by a plurality of applications. Alternatively, the data processing system may include an apparatus of another type. For example, the database 103 may be further connected to another apparatus, to support the another apparatus in accessing the computation result stored in the database 103, and the like. A specific architecture of the data processing system is not limited in this application.

In addition, the data processing apparatus 200 may be implemented by using software, or may be implemented by using hardware. For example, the following describes an implementation of the data processing apparatus 200.

As an example of a software functional unit, the data processing apparatus 200 may include code running on an instance. The instance may be at least one of a host, a virtual machine, a container, a thread, or a process. In addition, there may be one or more instances. For example, the data processing apparatus 200 may be a stream processing engine (stream processing engine), which can process and analyze, based on an event-driven mode, a data stream generated in real time, and may trigger processing of event data when there is no event driver by loading a corresponding software development kit (software development kit, SDK). Alternatively, the data processing apparatus 200 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. One VPC is usually disposed in one region. For cross-region communication between two VPCs in a same region and between VPCs in different regions, a communication gateway needs to be disposed in each VPC, and interconnection between the VPCs is implemented through the communication gateway.

The data processing apparatus 200 is used as an example of a hardware functional unit, and the data processing apparatus 200 may include at least one compute device, like a cloud server. Alternatively, the data processing apparatus 200 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), a data processing unit (Data processing unit, DPU), or any combination thereof.

When the data processing apparatus 200 may include a plurality of compute devices, the plurality of compute devices may be distributed in a same region, or may be distributed in different regions. The plurality of compute devices included in the data processing apparatus 200 may be distributed in a same AZ, or may be distributed in different AZs. Similarly, the plurality of compute devices included in the data processing apparatus 200 may be distributed in a same VPC, or may be distributed in a plurality of VPCs. The plurality of compute devices may be any combination of compute devices such as a server, an ASIC, a PLD, a CPLD, an FPGA, and GAL.

It should be noted that, the method steps performed by the modules in the data processing apparatus 200 are merely used as an example for description, and are not intended to limit. For example, in another example implementation, the interaction module 201 in the data processing apparatus 200 may be configured to perform method steps performed by any module in the data processing apparatus 200, the creation module 202 may be configured to perform method steps performed by any module in the data processing apparatus 200, the processing module 203 may be configured to perform method steps performed by any module in the data processing apparatus 200, and the storage module 204 may be configured to perform method steps performed by any module in the data processing apparatus 200. Steps implemented by the interaction module 201, the creation module 202, the processing module 203, and the storage module 204 may be specified as required. The interaction module 201, the creation module 202, the processing module 203, and the storage module 204 respectively implement different method steps in the foregoing data processing process to implement all functions of the data processing apparatus 200.

For ease of understanding, the following describes in detail various non-limiting specific implementations of the processing process of the event data.

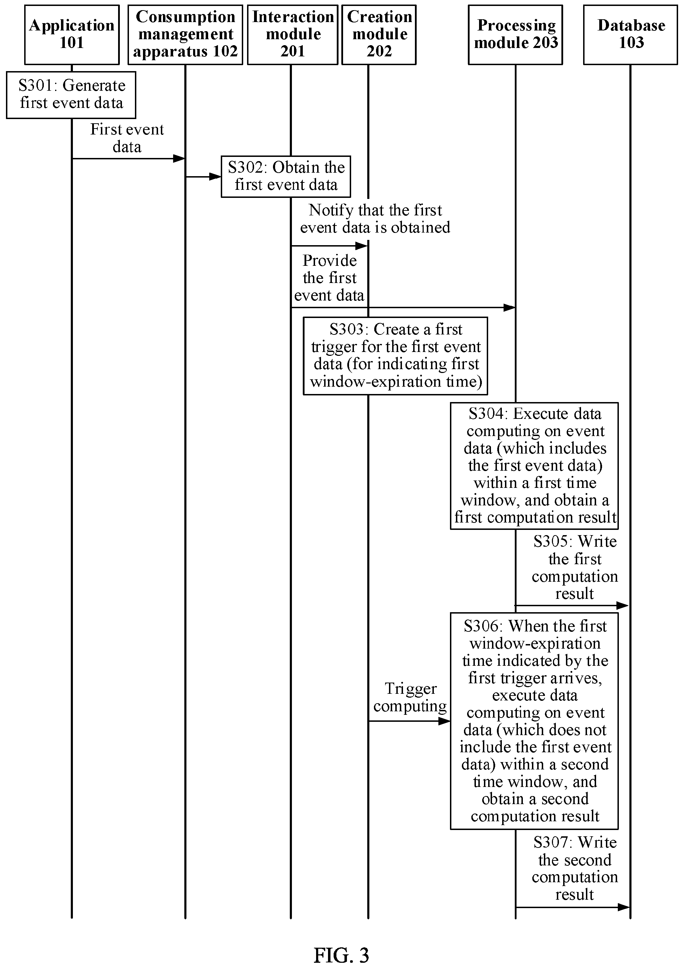

FIG. 3 is a schematic flowchart of a data processing method according to an embodiment of this application. The method may be applied to the data processing system 10 shown in FIG. 1, or may be applied to another applicable data processing system. The following uses an example in which the method is applied to the data processing system 10 shown in FIG. 1 for description of a process in which modules in the data processing apparatus 200 process event data and update the computation result in the database 103.

As shown in FIG. 3, the data processing method may specifically include the following steps.

S301: The application 101 generates first event data, and sends the first event data to the message management apparatus 102 for buffering.

In actual application, in a running process, one or more applications in the data processing system 10 may generate an event, and generate data related to the event (that is, event data). For example, in a running process, financial software may respond to an operation of a user, and generate a transaction event and details related to the transaction event, including data such as a transaction amount, transaction time, accounts of transaction parties, a user identity, and a transaction order number.

In this embodiment, an example in which the application 101 generates the first event data is used. The application 101 may send the first event data to the message management apparatus 102 for buffering, for example, write the first event data into a queue in the message management apparatus 102. In an actual application scenario, the application 101 may generate a data stream in a time period, and the data stream includes a plurality of pieces of event data, so that the application 101 may write all the plurality of pieces of event data into the message management apparatus 102.

S302: The interaction module 201 obtains the first event data from the message management apparatus 102.

In a possible implementation, the interaction module 201 may periodically poll the message management apparatus 102, to determine whether event data is buffered in the message management apparatus 102, so that after the application 101 writes the first event data into the message management apparatus 102, the interaction module 201 may access and obtain the first event data.

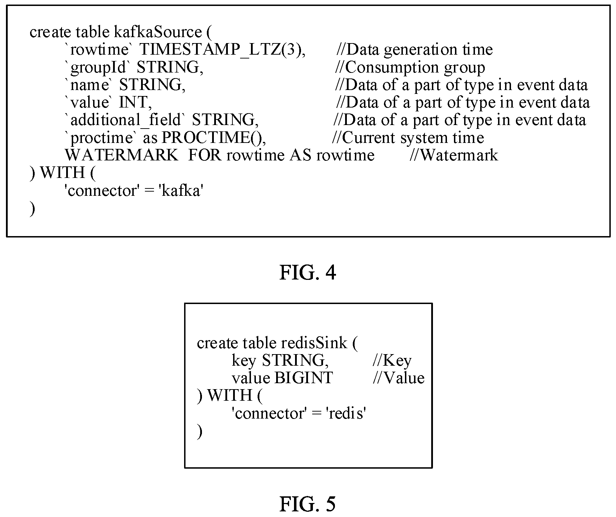

For example, the message management apparatus 102 may include a Kafka system (that is, a high-throughput distributed message release and subscription system), and can support the data processing apparatus 200 in consuming event data stored in the Kafka system. For example, the first event data may be written into the Kafka system for buffering in, for example, a definition manner shown in FIG. 4.

In another embodiment, the interaction module 201 may alternatively obtain the first event data in another manner. For example, the message management apparatus 102 may actively send the first event data to the interaction module 201.

Then, the interaction module 201 may notify the creation module 202 to obtain the first event data, and may provide the first event data for the processing module 203.

S303: The creation module 202 creates a first trigger for the first event data in response to obtaining the first event data, where the first trigger indicates first window-expiration time corresponding to the first event data.

For example, the created first trigger may include, for example, a timer. The timer may start timing after the first trigger is created. In addition, when timing duration of the timer reaches preset duration, the first trigger may trigger the processing module 203 to perform computing on event data within a time window again. The preset duration may be duration of a single time window, for example, may be 20 minutes. When the timing duration of the timer reaches 20 minutes, the processing module 203 may be triggered to perform computing on the event data again. Correspondingly, a moment at which the timing duration of the timer reaches 20 minutes is the first window-expiration time corresponding to the first event data, that is, expiration time of the first event data.

The time window is a time period of fixed duration, and the time period shifts as time moves. As shown in FIG. 2, a plurality of time windows change as time moves. In an actual application, the time window may be a period of time before a current moment (for example, current time of the data processing system 10).

In a possible implementation, the creation module 202 may provide a trigger service (service), so that after obtaining the first event data, the interaction module 201 may request the trigger service in the creation module 202 for registration of a trigger for the first event data, and the trigger service may create the corresponding first trigger based on the request.

S304: The processing module 203 executes, in response to obtaining the first event data, data computing based on event data within a first time window, and obtains a first computation result, where the event data within the first time window includes the first event data, and the obtained first computation result is used to update a computation result in the database 103.

Generally, the data processing apparatus 200 may trigger, when there is an event driver, computing on the event data. Therefore, after the interaction module 201 provides the first event data for the processing module 203, the processing module 203 may obtain the event data within the first time window. The first time window may be a time window that uses a current moment as an end moment. The obtained event data within the first time window is event data that does not expire in a time period indicated by the first time window, or is referred to as event data obtained by the interaction module 201 in a time period indicated by the first time window.

For example, each time the interaction module 201 obtains the event data, the interaction module 201 may store the event data in the storage module 204, so that the processing module 203 may access the storage module 204 and obtain the event data within the first time window.

Then, the processing module 203 may execute data computing on the event data within the first time window, and obtain the corresponding first computation result. The executed data computing may be, for example, collecting statistics on a quantity of pieces of the event data within the first time window, and an obtained value indicating the quantity of pieces of the event data is the first computation result; data computing may be performing summation on the event data within the first time window, for example, computing a sum of transaction amounts in all pieces of event data, and the obtained sum is the first computation result; or data computing may be computing an average value/a median value or the like of the event data within the first time window, and the obtained average value/the median value is the first computation result. A specific implementation of data computing is not limited in this embodiment.

After computing and obtaining the first computation result, the processing module 203 provides the first computation result for the interaction module 201.

S305: The interaction module 201 writes the first computation result into the database 103, to update the computation result stored in the database 103.

For example, the database 103 may store, in a key-value pair manner, the first computation result (and another computation result) provided by the interaction module 201. In this case, the database 103 may be, for example, a Redis database. For example, the first computation result may be written into the database 103 in a definition manner shown in FIG. 5.

In this case, a computation result read from the database 103 is the first computation result.

S306: When the first window-expiration time indicated by the first trigger arrives, the processing module 203 executes data computing based on event data within a second time window, and obtains a second computation result, where the event data within the second time window does not include the first event data, a start moment of the second time window is later than a start moment of the first time window, and the obtained second computation result is used to update the computation result in the database 103.

It may be understood that, as time moves, existence duration of the first event data exceeds duration of a single time window, that is, the first event data expires. In this case, the computation result stored in the database 103 is still obtained through computing based on the expired first event data. Consequently, errors are prone to occur in the computation result read from the database 103. Therefore, in this embodiment, when the first event data expires, the processing module 203 may perform data recomputing based on the unexpired event data.

For example, when the timing duration of the timer included in the first trigger reaches duration of a time window, it represents that a current moment is expiration time of the first event data, that is, the first window-expiration time. The creation module 202 may trigger the processing module 203 to perform data computing on the event data by invoking a corresponding function or an application programming interface (application programming interface, API) interface.

The processing module 203 is triggered by the creation module 202 to obtain the event data within the second time window. The second time window may be a time window that uses a current moment as an end moment. The obtained event data within the second time window is event data that does not expire in a time period indicated by the second time window. Because the first event data has expired at the current moment, the event data that is within the second time window and that is obtained by the processing module 203 does not include the first event data.

In a possible implementation, the processing module 203 may access a target storage area in the storage module 204, to obtain original event data, where the original event data includes the first event data. Then, the processing module 203 may exclude the expired first event data from the original event data, and all remaining obtained event data is unexpired data, that is, the event data within the second time window. Therefore, the processing module 203 may perform data computing based on the event data within the second time window, and obtain a new computation result, which is referred to as the second computation result in embodiments. A data computational process executed based on the event data within the second time window is similar to a data computational process executed based on the event data within the first time window. Details are not described herein again.

After computing and obtaining the second computation result, the processing module 203 provides the second computation result for the interaction module 201.

S307: The interaction module 201 writes the second computation result into the database 103, to update the computation result stored in the database 103.

In this case, a computation result read from the database 103 is the second computation result.

In this way, when the first event data expires and there is no event driver, the processing module 203 may also perform computing on the event data within the second time window to update the computation result stored in the database 103. This causes the computation result stored in the database 103 to be dynamically updated as a time window shifts, and avoids expiration of the computation result stored in the database 103, thereby effectively improving accuracy of the computation result read from the database 103.

Further, after the first event data expires, the processing module 203 may indicate the storage module 204 to delete the first event data in the target storage area, to release a storage resource occupied by the first event data, thereby reducing a resource waste.

In an actual application, in addition to creating, for event data, a trigger that indicates a window-expiration event, the creation module 202 may further create a trigger of another type. For example, the creation module 202 may further create a trigger that indicates a maximum quantity of pieces of event data. When a quantity of pieces of event data obtained in a preset time period exceeds the preset quantity, the trigger can trigger the processing module 203 to perform computing on event data within a current time window, to avoid data computing omission caused by obtaining a large quantity of pieces of event data in a short time.

A process of processing event data described in this embodiment is mainly described by using an example in which the data processing apparatus 200 obtains the first event data and triggers, when the first event data expires, execution of computing on event data. When the data processing apparatus 200 obtains the second event data (and another piece of event data) and the second event data (and the another piece of event data) expires, with reference to the foregoing process, the data processing apparatus 200 may perform a process of performing computing on event data within a current time window, and update the database 103 by using an obtained computation result, to ensure the accuracy of the computation result read from the database 103.

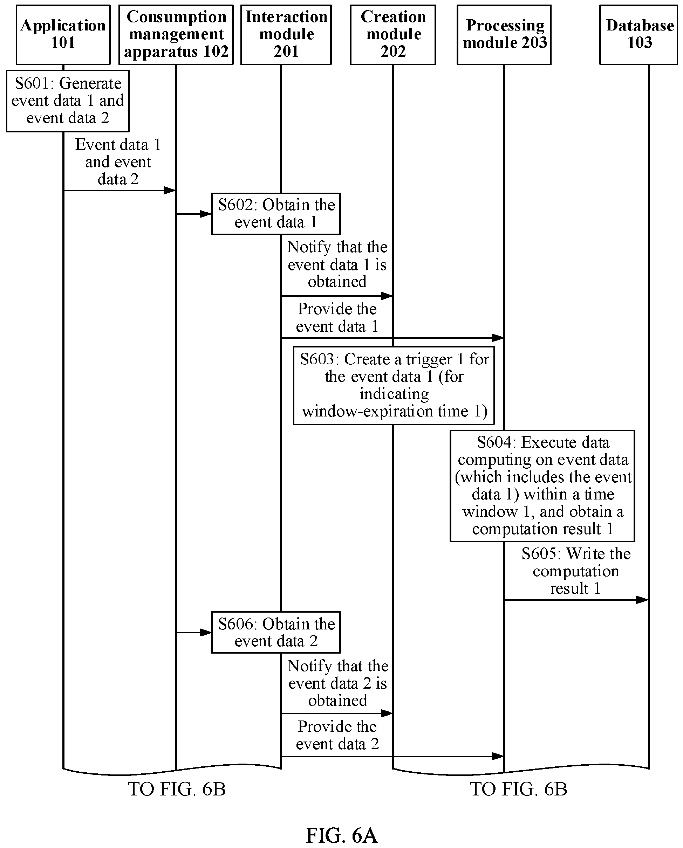

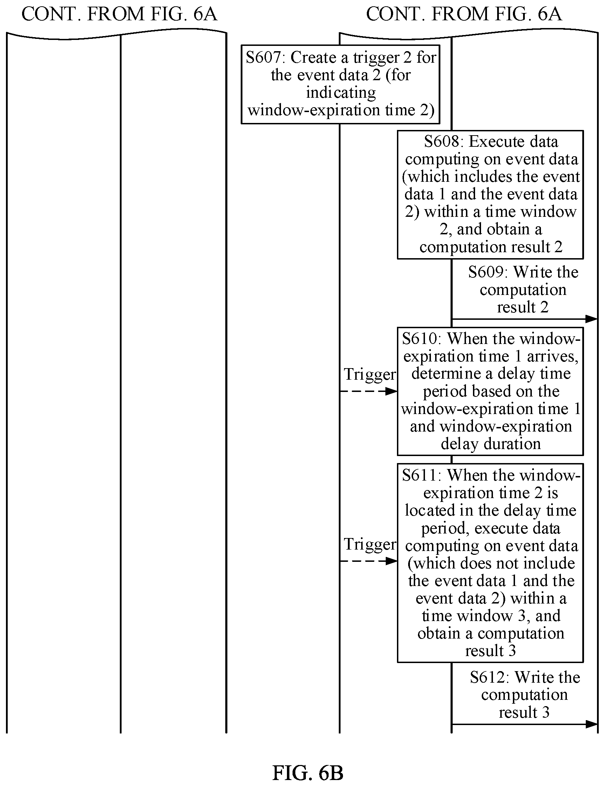

In the data processing method shown in FIG. 3, when each piece of event data expires, the data processing apparatus 200 may be triggered to perform computing on event data within a current time window again. In an actual application scenario, when a plurality of pieces of event data all expire in a short time, the data processing apparatus 200 may frequently execute a data computational process, and consequently, large resource consumption is caused, including large compute resource consumption. Based on this, in another possible embodiment, when a plurality of pieces of event data all expire in a short time, the data processing apparatus 200 may be triggered to execute a data computational process only once, to reduce resource consumption of the data processing apparatus 200. This is described in detail below with reference to FIG. 6A and FIG. 6B.

FIG. 6A and FIG. 6B are a schematic flowchart of other data processing. For ease of description, in the embodiment shown in FIG. 6A and FIG. 6B, an example in which two pieces of event data expire in a short time period is used for description. When more pieces of event data expire, processing may be performed with reference to a similar process.

As shown in FIG. 6A and FIG. 6B, the method may specifically include the following steps.

S601: An application 101 generates event data 1 and event data 2, and separately sends the event data 1 and the event data 2 to a message management apparatus 102 for buffering.

S602: An interaction module 201 obtains the event data 1 from the message management apparatus 102.

S603: A creation module 202 creates a trigger 1 for the event data 1 in response to obtaining the event data 1, where the trigger 1 indicates window-expiration time 1 corresponding to the event data 1.

S604: A processing module 203 executes, in response to obtaining the event data 1, data computing based on event data within a time window 1, and obtains a computation result 1, where the event data within the time window 1 includes the event data 1.

S605: The interaction module 201 writes the computation result 1 into a database 103, to update a computation result stored in the database 103.

In this case, a computation result read from the database 103 is the computation result 1.

Specific implementations of step S601 to step S605 are similar to implementations of step S301 to step S305 in the foregoing embodiment. For details, refer to related descriptions in the foregoing embodiment. Details are not described herein again.

S606: The interaction module 201 obtains the event data 2 from the message management apparatus 102.

A time interval between a moment at which the interaction module 201 obtains the event data 2 and a moment at which the interaction module 201 obtains the event data 1 may be less than a threshold. The threshold may be, for example, the following window-expiration delay duration. In this way, a subsequent time interval between a moment at which the event data 1 expires and a moment at which the event data 2 expires may also be less than a threshold, in other words, expiration time of the event data 1 is close to expiration time of the event data 2.

S607: The creation module 202 creates a trigger 2 for the event data 2 in response to obtaining the event data 2, where the trigger 2 indicates window-expiration time 2 corresponding to the event data 2.

S608: The processing module 203 executes, in response to obtaining the event data 2, data computing based on event data within a time window 2, and obtain a computation result 2, where the event data within the time window 2 includes the event data 1 and the event data 2.

S609: The interaction module 201 writes the computation result 2 into the database 103, to update the computation result stored in the database 103.

In this case, a computation result read from the database 103 is the computation result 2.

In this embodiment, each time the data processing apparatus 200 obtains new event data, the data processing apparatus 200 may trigger a process of execution of data computing on event data within a time window, to obtain a corresponding computation result and update the database 103.

Specific implementations of step S606 to step S609 are similar to implementations of step S302 to step S305 in the foregoing embodiment. For details, refer to related descriptions in the foregoing embodiment. Details are not described herein again.

S610: When the window-expiration time 1 indicated by the trigger 1 arrives, the processing module 203 determines a delay time period based on the window-expiration time 1 and window-expiration delay duration.

S611: When the window-expiration time 2 indicated by the trigger 2 is within the delay time period, the processing module 203 executes data computing based on event data within a time window 3 when an end moment of the delay time period arrives, and obtain a computation result 3, where the event data within the time window 3 does not include the event data 1 and the event data 2.

In this embodiment, as time moves, the event data 1 and the event data 2 expire successively. When the window-expiration time 1 indicated by the trigger 1 arrives, the creation module 202 may trigger the processing module 203 to execute a data computational process. In this case, because another piece of event data (that is, the event data 2 in this embodiment) may also be about to expire, the processing module 203 may delay execution of the data computational process for a period of time.

During specific implementation, the processing module 203 may first determine the delay time period based on the window-expiration time 1 corresponding to the event data 1 and the window-expiration delay duration, that is, determine a moment (an end moment of the delay time period) until which execution of the data computational process is delayed. In this way, when the window-expiration time indicated by the trigger 2 (and a trigger corresponding to another piece of event data) corresponding to the event data 2 is also within the delay time period, the processing module 203 may not respond to a trigger indication sent by the creation module 202 for the event data 2 (or the another piece of event data), and start to execute the data computational process only when the end moment of the delay time period arrives.

For example, the processing module 203 may access a target storage area of a storage module 204, to obtain original event data. The original event data includes the event data 1 and the event data 2, and may further include other data obtained after the event data 2 is obtained. Then, the processing module 203 may exclude the event data 1 and the event data 2 from the original event data and obtain the event data (that is, excluded original event data) within the time window 3, and execute data computing based on the event data within the time window 3 and obtain the computation result 3.

In an actual application scenario, the data processing apparatus 200 may separately perform data computing on different types of event data of the application 101, or may perform data computing on event data generated by different applications. In this case, the data processing apparatus 200 may perform data computing on event data, which has a same primary key, each time, and event data that does not have the same primary key does not participate in a same data computational process. For example, event data A1 and event data A2 that are of a transaction type and that are generated by the application 101 may have a same primary key "transaction amount", and event data B1 and event data B1 that are of a query type and that are generated by the application 101 may have a same primary key "query location". Correspondingly, the data processing apparatus 200 executes a data computational process of a type A for the event data A1 and the event data A2 that have the same primary key, and executes a data computational process of a type B for the event data B1 and the event data B2 that have the same primary key.

Therefore, the processing module 203 may access the target storage area based on a primary key included in the event data 1, to obtain original event data having the same primary key, exclude the event data 1 and the event data 2 from the original event data that have the same primary key, and generate the computation result 3 based on the remaining event data.

S612: The interaction module 201 writes the computation result 3 into the database 103, to update the computation result stored in the database 103.

In this case, a computation result read from the database 103 is the computation result 3.

In this way, although both the event data 1 and the event data 2 expire within the delay time period, the processing module 203 may execute a data computational process only once when the delay time period ends. This can prevent the processing module 203 from executing the data computational process a plurality of times when a plurality of pieces of event data expire, and can effectively reduce a quantity of times that the data processing apparatus 200 frequently executes the data computational process in a short time, thereby avoiding large resource consumption.

Further, after the event data 1 and the event data 2 expire, the processing module 203 may further indicate the storage module 204 to delete the event data 1 and the event data 2 from the target storage area, to release storage resources occupied by the two pieces of event data.

It may be understood that, the foregoing uses two pieces of event data as an example for description. If there is event data 3, and when expiration time of the event data 3 is also within the delay time period, a trigger corresponding to the event data 3 does not trigger the processing module 203 to execute the data computational process. When the expiration time of the event data 3 exceeds the delay time period, that is, the expiration time of the event data 3 is later than the end moment of the delay time period, and when the event data 3 expires, the trigger corresponding to the event data 3 may trigger the processing module 203 to execute the data computational process again. Specifically, it is assumed that the interaction module 201 further obtains, from the message management apparatus 102, the event data 3 generated by the application 101, the creation module 202 may create a trigger 3 for the event data 3 in response to obtaining the event data 3. The trigger 3 indicates window-expiration time 3 corresponding to the event data 3. It is assumed that a time interval between the window-expiration time 3 and the window-expiration time 1 is greater than the window-expiration delay duration corresponding to the event data 1, and the window-expiration time 3 is later than the window-expiration time 1, the processing module 203 executes, in response to obtaining the event data 3, data computing based on event data within a time window 4, and obtains a computation result 4. The event data within the time window 4 includes the event data 3. When the end moment of the delay time period arrives, the window-expiration time 3 does not arrive, and the processing module 203 executes data computing based on the event data within the time window 3, and obtains the computation result 3. Then, when the window-expiration time 3 arrives, the processor 203 executes data computing based on the event data within the time window 5, and obtains the computation result 4. In this case, the event data within the time window 5 does not include the event data 1, the event data 2, and the event data 3. In this way, when the event data 1, the event data 2, and the event data 3 expire, the processing module 203 is triggered to execute the data computational processes twice.

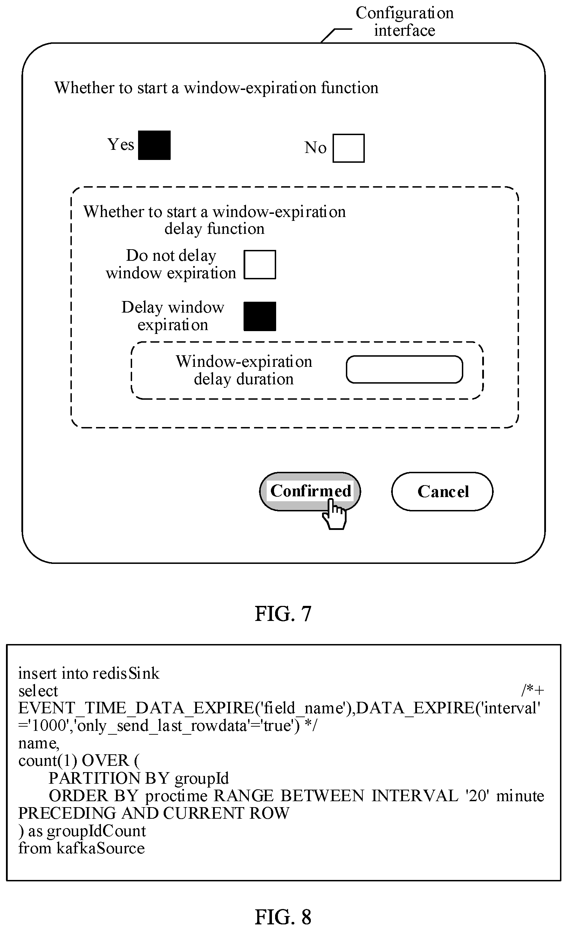

In an actual application, the data processing apparatus 200 may further support a user in configuring a window-expiration function and a window-expiration delay function. Specifically, the data processing apparatus 200 may output a configuration interface to the client 104, for example, may output a configuration interface shown in FIG. 7. The configuration interface is used to prompt the user whether to enable the window-expiration function and the window-expiration delay function. The window-expiration function is to trigger the processing module 203 to execute a data computational process when event data expires. The window-expiration delay function is to trigger the processing module 203 to execute a data computational process only once when a plurality of pieces of event data expire in a short time. When the user configures, on the configuration interface, to enable the window-expiration delay function, for example, the user selects a "window-expiration delay" button on the configuration interface shown in FIG. 7, the user may further configure window-expiration delay duration on the configuration interface, for example, configure the window-expiration delay duration to be 1 second.

In this way, the client 104 provides, based on an operation performed by the user, configuration information (including enabling the window-expiration delay function and a value of the window-expiration delay duration) for the data processing apparatus 200, so that the data processing apparatus 200 may execute a corresponding data computational process based on the configuration information when the event data expires. For example, a corresponding job may be defined in the data processing apparatus 200, for example, an SQL job shown in FIG. 8. The job can enable the window-expiration function, the window-expiration delay function, event data merging (or may be referred to as traffic optimization), and the like in a manner like annotation.

For example, after receiving the configuration information, the data processing apparatus 200 may set a value of a first field. Different values of the first field may respectively indicate that the window-expiration function is not enabled, that the window-expiration function is enabled but the window-expiration delay function is not enabled, and that the window-expiration delay function is enabled. For example, the first field may be, for example, a field named as "over.window.interval". In addition, when the value of the field is -1, it indicates that the window-expiration function is not enabled; when the value of the field is 0, it indicates that the window-expiration function is enabled but the window-expiration delay function is not enabled; or when the value of the field is greater than 0, it indicates that the window-expiration delay function is enabled, and the value of the field indicates the window-expiration delay duration.

Further, when the value of the first field is a value greater than 0, that is, when the user indicates to enable the window-expiration delay function, the data processing apparatus 200 may further set a value of a second field based on the configuration information, where the value of the second field indicates whether to merge event data to trigger execution of data computing. For example, the second field may be, for example, a field named as "over.window.interval.last.rowdata". In addition, when the value of the field is "true", it indicates to merge the event data to trigger execution of data computing. When a plurality of pieces of event data expire within the delay time period, execution of data computing is triggered only at an end moment of the delay time period. When the value of the field is "false", it indicates that each piece of expired event data separately triggers execution of data computing, that is, when each piece of event data expires, execution of data computing may be delayed and separately triggered.

It should be noted that, the embodiment shown in FIG. 6A and FIG. 6B is merely used as an example implementation, and is not used for limitation. For example, in another possible embodiment, when the window-expiration time 1 indicated by the trigger 1 arrives, alternatively, the creation module 202 may determine the delay time period based on the window-expiration time 1 and the window-expiration delay duration, and temporarily not trigger the processing module 203 to execute data computing. In the delay time period, when the event data 2 expires, that is, when the window-expiration time 1 corresponding to the trigger 2 arrives, the creation module 202 may alternatively not trigger the processing module 203 to execute data computing, and the processing module 203 is triggered to execute data computing only when the end moment of the delay time period arrives. In other words, when a plurality of pieces of event data expire, the creation module 202 sends a trigger indication to the processing module 203 only once, so that the processing module 203 executes the data computational process once. Alternatively, after the user configures the window-expiration delay duration, the processing module 203 may determine, based on fixed duration of the window-expiration time and the window-expiration delay duration, the time indicated by the window-expiration time 1, that is, the end moment of the delay time period.

In embodiments shown in FIG. 1 to FIG. 8, the data processing apparatus 200 may be software configured on a compute device or a compute device cluster. In addition, by running the software on the compute device or the compute device cluster, the compute device or the compute device cluster may implement the function of the data processing apparatus 200. The following describes the data processing apparatus 200 in detail from a perspective of hardware device implementation.

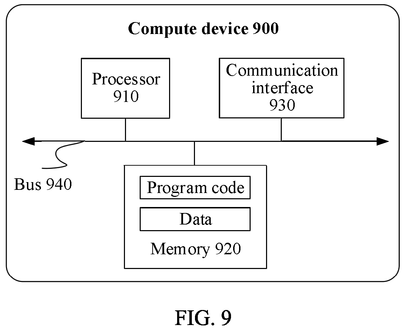

FIG. 9 is a diagram of a structure of a compute device. The data processing apparatus 200 may be deployed on the compute device. The compute device may be a compute device (for example, a server) in a cloud environment, a compute device in an edge environment, or the like, and may be specifically configured to implement the function of the data processing apparatus 200 in embodiments shown in FIG. 3, FIG. 6A, and FIG. 6B.

As shown in FIG. 9, a compute device 900 includes a processor 910, a memory 920, a communication interface 930, and a bus 940. The processor 910, the memory 920, and the communication interface 930 communicate with each other through the bus 940. The bus 940 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one bold line in FIG. 9. However, it does not mean that there is only one bus or only one type of bus. The communication interface 930 is configured to communicate with the outside, for example, obtain event data and output a computation result.

The processor 910 may be a central processing unit (central processing unit, CPU), an application specific integrated circuit (application specific integrated circuit, ASIC), a graphics processing unit (graphics processing unit, GPU), or one or more integrated circuits. The processor 910 may alternatively be an integrated circuit chip and has a signal processing capability. In an implementation process, functions of the apparatuses in the data processing apparatus 200 may be completed by using an integrated logic circuit of hardware in the processor 910, or by using instructions in a software form. The processor 910 may alternatively be a general-purpose processor, a data signal processor (digital signal processor, DSP), a field programmable gate array (field programmable gate array, FPGA) or another programmable logic device, a discrete gate or a transistor logic device, or a discrete hardware component, and may implement or perform the methods, steps, and logical block diagrams disclosed in embodiments of this application. The general-purpose processor may be a microprocessor, or the processor may be any conventional processor, or the like. The method disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 920. The processor 910 reads information in the memory 920, and completes a part or all of functions of the data processing apparatus 200 in combination with hardware of the processor 910.

The memory 920 may include a volatile memory (volatile memory), for example, a random access memory (random access memory, RAM). The memory 920 may further include a nonvolatile memory (nonvolatile memory), for example, a read-only memory (read-only memory, ROM), a flash memory, an HDD, or an SSD.

The memory 920 stores executable code, and the processor 910 executes the executable code to perform the method performed by the data processing apparatus 200.

Specifically, in a case of implementing embodiments shown in FIG. 3, FIG. 6A, and FIG. 6B, and in a case of implementing the data processing apparatus 200 described in embodiments shown in FIG. 3, FIG. 6A, and FIG. 6B by using software, software or program code required for performing functions of the data processing apparatus 200 in FIG. 3, FIG. 6A, and FIG. 6B is stored in the memory 920. Interaction between the data processing apparatus 200 and another apparatus is implemented through the communication interface 930. The processor is configured to execute instructions in the memory 920, to implement the method performed by the data processing apparatus 200.

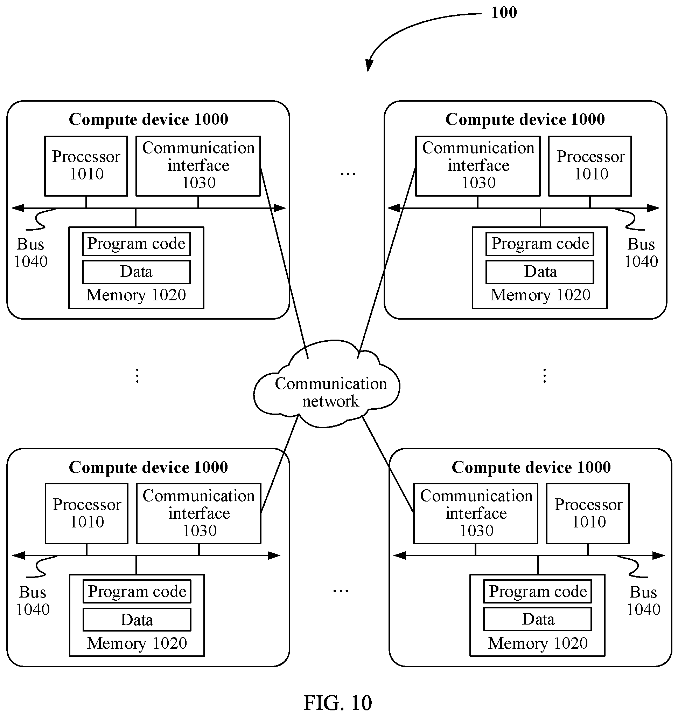

FIG. 10 is a diagram of a structure of a compute device cluster. The compute device cluster 100 shown in FIG. 10 includes a plurality of compute devices, and the foregoing data processing apparatus 200 may be deployed on the plurality of compute devices in the compute device cluster 100 in a distributed manner. As shown in FIG. 10, the compute device cluster 100 includes a plurality of compute devices 1000. Each compute device 1000 includes a memory 1020, a processor 1010, a communication interface 1030, and a bus 1040. The memory 1020, the processor 1010, and the communication interface 1030 implement mutual communication connections through the bus 1040.

The processor 1010 may be a CPU, a GPU, an ASIC, or one or more integrated circuits. The processor 1010 may alternatively be an integrated circuit chip and has a signal processing capability. In an implementation process, a part of functions of the data processing apparatus 200 may be completed by using an integrated logic circuit of hardware in the processor 1010, or by using instructions in a software form. The processor 1010 may alternatively be a DSP, an FPGA, a general-purpose processor, another programmable logic device, a discrete gate or a transistor logic device, or a discrete hardware component, and may implement or perform a part of the methods, steps, and logical block diagrams disclosed in embodiments of this application. The general-purpose processor may be a microprocessor, or the processor may be any conventional processor, or the like. The steps of the method disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 1020. In each compute device 1000, the processor 1010 reads information in the memory 1020, and may complete a part of functions of the data processing apparatus 200 in combination with hardware of the processor 1010.

The memory 1020 may include a ROM, a RAM, a static storage device, a dynamic storage device, a hard disk drive (for example, an SSD or an HDD), and the like. The memory 1020 may store program code, for example, a part or all of program code used to implement the interaction module 201, a part or all of program code used to implement the creation module 202, and a part or all of program code used to implement the processing module 203. For each compute device 1000, when the program code stored in the memory 1020 is executed by the processor 1010, the processor 1010 performs, based on the communication interface 1030, a part of methods performed by the data processing apparatus 200. The memory 1020 may further store data, for example, intermediate data or result data generated by the processor 1010 in an execution process, for example, the foregoing computation result.

The communication interface 1003 in each compute device 1000 is configured to communicate with the outside, for example, interact with another compute device 1000.

The bus 1040 may be a peripheral component interconnect bus, an extended industry standard architecture bus, or the like. For ease of representation, the bus 1040 in each compute device 1000 is represented by using only one line in FIG. 10. However, it does not mean that there is only one bus or only one type of bus.

A communication path is established between the plurality of compute devices 1000 through a communication network, to implement functions of the data processing apparatus 200. Any one of the compute devices may be a compute device (for example, a server) in a cloud environment or a compute device in an edge environment.

In addition, an embodiment of this application further provides a computer-readable storage medium. The computer-readable storage medium stores instructions. When the instructions are run on one or more compute devices, the one or more compute devices are caused to perform the method performed by the data processing apparatus 200 in the foregoing embodiments.

In addition, an embodiment of this application further provides a computer program product. When the computer program product is executed by one or more compute devices, the one or more compute devices perform any method in the foregoing data processing methods. The computer program product may be a software installation package. When any method in the foregoing data processing methods needs to be used, the computer program product may be downloaded, and the computer program product may be executed on a computer.

In addition, it should be noted that, the described system embodiments are merely examples. The apparatus described as separate parts may or may not be physically separate, and parts displayed as apparatus may or may not be physical apparatus, may be located in one position, or may be distributed on a plurality of network apparatus. A part or all of the modules may be selected according to actual requirements to achieve the objectives of the solutions in embodiments. In addition, in the accompanying drawings of the system embodiments provided in this application, connection relationships between apparatuses indicate that the apparatuses are communicatively connected to each other, which may be specifically implemented as one or more communication buses or signal lines.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated device, and the like. Generally, any functions that can be performed by a computer program may be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk drive, a ROM, a RAM, a magnetic disk, or a compact disc, and includes several instructions for instructing a computer device (which may be a personal computer, a training device, a network device, or the like) to perform all or a part of methods in embodiments of this application.

All or a part of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, for example, a training device or a data center, including one or more usable media. The usable medium may be a magnetic medium (for example, a floppy disk, a hard disk drive, or a magnetic tape), an optical medium (for example, a DVD), a semiconductor medium (for example, a solid state drive (Solid State Drive, SSD)), or the like.

## Claims

1. A data processing method, wherein the method comprises:
obtaining first event data;
in response to obtaining the first event data, creating a first trigger for the first event data, wherein the first trigger indicates first window-expiration time corresponding to the first event data;
in response to obtaining the first event data, executing data computing based on event data within a first time window, obtaining a first computation result, and outputting the first computation result, wherein the event data within the first time window comprises the first event data, and the first computation result is used to update a computation result in a database; and
when the first window-expiration time indicated by the first trigger arrives, executing data computing based on event data within a second time window, obtaining a second computation result, and outputting the second computation result, wherein the event data within the second time window does not comprise the first event data, a start moment of the second time window is later than a start moment of the first time window, and the second computation result is used to update the computation result in the database.

2. The method according to claim 1, wherein the method further comprises:
obtaining second event data and third event data;
in response to obtaining the second event data, creating a second trigger for the second event data, wherein the second trigger indicates second window-expiration time corresponding to the second event data;
in response to obtaining the third event data, creating a third trigger for the third event data, wherein the third trigger indicates third window-expiration time corresponding to the third event data, a time interval between the third window-expiration time and the second window-expiration time is less than window-expiration delay duration corresponding to the second event data, and the third window-expiration time is later than the second window-expiration time;
determining a delay time period based on the second window-expiration time and the window-expiration delay duration; and
when an end moment of the delay time period arrives, executing data computing based on event data within a third time window, wherein the event data within the third time window does not comprise the second event data and the third event data.

3. The method according to claim 2, wherein the second event data and the third event data are stored in a target storage area; and
the executing data computing based on the event data within the third time window comprises:
obtaining original event data stored in the target storage area;
excluding the second event data and the third event data from the original event data, and obtaining the event data within the third time window; and
executing data computing based on the event data within the third time window, and obtaining a third computation result, wherein the third computation result is used to update the computation result in the database.

4. The method according to claim 3, wherein the second event data and the third event data comprise a same primary key, and the target storage area stores event data comprising different primary keys; and
the obtaining the original event data stored in the target storage area comprises:
obtaining, based on the primary key, the original event data stored in the target storage area.

5. The method according to any one of claims 2 to 4, wherein the method further comprises:
obtaining fourth event data;
in response to obtaining the fourth event data, creating a fourth trigger for the fourth event data, wherein the fourth trigger indicates fourth window-expiration time corresponding to the fourth event data, a time interval between the fourth window-expiration time and the second window-expiration time is greater than the window-expiration delay duration corresponding to the second event data, and the fourth window-expiration time is later than the second window-expiration time; and
after data computing is executed based on the event data within the third time window, and when the fourth window-expiration time indicated by the fourth trigger arrives, executing data computing based on event data within a fourth time window, wherein the event data within the fourth time window does not comprise the second event data, the third event data, and the fourth event data.

6. The method according to any one of claims 3 to 5, wherein the method further comprises:
after obtaining the third computation result, deleting the second event data and the third event data from the target storage area.

7. The method according to any one of claims 2 to 6, wherein the method further comprises:
outputting a configuration interface; and
in response to a configuration operation performed by a user on the configuration interface for a window-expiration delay duration, obtaining the window-expiration delay duration corresponding to the second event data.

8. A data processing apparatus, wherein the apparatus comprises:
an interaction module, configured to obtain first event data;
a creation module, configured to create a first trigger for the first event data in response to obtaining the first event data, wherein the first trigger indicates first window-expiration time corresponding to the first event data;
a processing module, configured to: execute, in response to obtaining the first event data, data computing based on event data within a first time window, and obtain a first computation result, wherein the event data within the first time window comprises the first event data, and the first computation result is used to update a computation result in a database;
the interaction module, further configured to output the first computation result;
the processing module, further configured to: execute, when the first window-expiration time indicated by the first trigger arrives, data computing based on event data within a second time window, and obtain a second computation result, wherein the event data within the second time window does not comprise the first event data, a start moment of the second time window is later than a start moment of the first time window, and the second computation result is used to update the computation result in the database; and
the interaction module, further configured to output the first computation result.

9. The apparatus according to claim 8, wherein
the interaction module is further configured to obtain second event data and third event data; the creation module is further configured to create a second trigger for the second event data in response to obtaining the second event data, wherein the second trigger indicates second window-expiration time corresponding to the second event data; and create a third trigger for the third event data in response to obtaining the third event data, wherein the third trigger indicates third window-expiration time corresponding to the third event data, a time interval between the third window-expiration time and the second window-expiration time is less than window-expiration delay duration corresponding to the second event data, and the third window-expiration time is later than the second window-expiration time; and
the processing module is further configured to:
determine a delay time period based on the second window-expiration time and the window-expiration delay duration; and
when an end moment of the delay time period arrives, execute data computing based on event data within the third time window, wherein the event data within the third time window does not comprise the second event data and the third event data.

10. The apparatus according to claim 9, wherein the second event data and the third event data are stored in a target storage area; and
the processing module is configured to:
obtain original event data stored in the target storage area;
exclude the second event data and the third event data from the original event data, and obtain the event data within the third time window; and
execute data computing based on the event data within the third time window, and obtain a third computation result, wherein the third computation result is used to update the computation result in the database.

11. The apparatus according to claim 10, wherein the second event data and the third event data comprise a same primary key, and the target storage area stores event data comprising different primary keys; and
the processing module is configured to obtain, based on the primary key, the original event data stored in the target storage area.

12. The apparatus according to any one of claims 9 to 11, wherein
the interaction module is further configured to obtain fourth event data;
the creation module is further configured to create a fourth trigger for the fourth event data in response to obtaining the fourth event data, wherein the fourth trigger indicates fourth window-expiration time corresponding to the fourth event data, a time interval between the fourth window-expiration time and the second window-expiration time is greater than the window-expiration delay duration corresponding to the second event data, and the fourth window-expiration time is later than the second window-expiration time; and
the processing module is further configured to execute, after data computing is executed based on the event data within the third time window, and when the fourth window-expiration time indicated by the fourth trigger arrives, data computing based on event data within a fourth time window, wherein the event data within the fourth time window does not comprise the second event data, the third event data, and the fourth event data.

13. The apparatus according to any one of claims 10 to 12, wherein the apparatus further comprises:
a storage module, configured to delete, after the third computation result is obtained, the second event data and the third event data from the target storage area.

14. The apparatus according to any one of claims 9 to 13, wherein the interaction module is further configured to:
output a configuration interface; and
obtain, in response to a configuration operation performed by a user on the configuration interface for a window-expiration delay duration, the window-expiration delay duration corresponding to the second event data.

15. A compute device cluster, comprising at least one compute device, wherein each compute device comprises a processor and a memory; and
the processor is configured to execute instructions stored in the memory, to cause the compute device cluster to perform the method according to any one of claims 1 to 7.

16. A computer-readable storage medium, wherein the computer-readable storage medium stores instructions, and when the instructions are run on at least one compute device, the at least one compute device is caused to perform the method according to any one of claims 1 to 7.
